# EUROPEAN PATENT SPECIFICATION

(11) **EP 2 731 199 B1**
(45) Date of publication and mention of the grant of the patent: **25.09.2019**
(21) Application number: 13191896.3
(22) Date of filing: 07.11.2013
(51) Int. Cl.: H01R 12/89, H01R 13/24

(54) **Connector**
Verbinder
Connecteur

(30) Priority: 08.11.2012 JP 2012246246
(43) Date of publication of application: 14.05.2014
(73) Proprietor: Tyco Electronics Japan G.K., Takatsu-ku Kawasaki Kanagawa 213-8535 (JP)
(72) Inventor: Sasaki, Yoichi, Kawasaki-Shi, Kanagawa 213-8535 (JP)
(74) Representative: Johnstone, Douglas Ian

(56) References cited:
- EP-A2- 0 802 584
- WO-A1-98/19267
- DE-A1- 4 010 398
- DE-A1- 4 336 192
- JP-A- H09 251 878
- JP-A- 2009 152 144
- US-A1- 2002 070 274
- US-A1- 2011 021 079
- US-B1- 6 345 999
- US-B1- 6 796 842

## Description

### BACKGROUND OF THE INVENTION

### Field of the Invention

The present invention relates to a connector including a contact for making contact with a connection pad of a mating connector inserted into an insertion receiving section for receiving the mating connector therein.

### Description of the Related Art

There have been developed a connector including many contacts serving for transmitting plural electrical signals. Such a connector tends to be sized up as the number of contacts increases. In addition, such a connector tends to require a large mating force when the connector is mated with a mating connector.

Regarding decreasing of the mating force, there is known a connector of low-insertion-force type having a configuration in which, after an operation for mating with a mating connector with the connector is performed, other operations such as rotating a lever and the like are performed (see, for example, Japanese Patent Publication JP 2002-170642A) .

The low-insertion-force type connector can be mated with a mating connector by a small force since mating completion is performed by, for example, a lever operation and the like, and thus, the low-insertion-force type connector is suitable for one having many contacts. However, a connector of such type requires not only an operation of mating a mating connector, but also, subsequently, an operation of, for example, a lever operation and the like, and thus, requires operations two times for mating once. In addition, the connection needs to include members such as a lever member, a member for operating the lever member and the like are required, and further, an indicator for remembering a second operation (for example, a lever operation) and other schemes are also required, and thus, such connector tends to have a complicated configuration.

JP H09 251878 A discloses a connector according to the preamble of claim 1. US 2011/0021079 discloses also an electrical card connector comprising a housing including contacts, and a slider. The contacts are configured to be spaced from a first surface of an SD card when the SD card is initially inserted into an insertion receiving section of the housing by parts of the contacts resiliently engaging an inclined surface of a blocking portion of the slider. The slider has a pair of arms configured to be engaged by the SD card so that the slider is moved in the same direction as the SD card when the SD card is inserted into the connector. As the slider is moved, the blocking portion is moved away from the contacts so that the contacts spring through slots in the slider into engagement with the SD card.

US 2002/0070274 discloses an IC card reading connector having a body containing a plurality of terminals. The body holds a movable flat block and the block has trenches for receiving the terminals which are biased towards the top side of the block on which an IC card is to rest. The movable flat block also has an IC card holding plate on its top side. The distal end of each terminal has a pair of protrusions wherein each protrusion engages an inclined guide surface on an underside of the movable flat block. When an IC card is inserted into the connector it engages the IC card holding plate so that the movable flat block moves in the same direction as the IC card. As the movable flat block moves, the distal end of the terminals engage a different part of the inclined guide surface which is closer to the top side enabling the biased terminals to engage the IC card.

JP 2009-152144 discloses a connector having first and second pairs of contacts. When a wiring board is inserted between the first pair of contacts, these contacts are pushed perpendicular to the direction of insertion of the wiring board. Each first contact pushes an insulator against a corresponding one of the second contacts so that a second pressing part of each second contact engages the wiring board.

### SUMMARY OF THE INVENTION

In view of the foregoing problems, the present invention has been made to provide a connector whose mating is completed by only one insertion operation of a mating connector, and which has a configuration suitable for including many contacts.

A connector according to one aspect of the present invention is disclosed by claim 1 and includes: a housing including an insertion receiving section which is configured to receive a tabular insertion section of a mating connector having connection pads formed on a first surface of the insertion section; contacts configured to correspond to the connection pads, the contacts being configured to face the first surface when the insertion section of the mating connector is inserted into the insertion receiving section, and the contacts being configured to be spaced from the first surface when the insertion section is initially inserted into the insertion receiving section; and a pressing member being a slider, the slider configured to receive a force from the insertion section when the insertion section is at a final stage of insertion into the insertion receiving section, the slider including an abutment section which is configured to be engaged by the insertion section when the insertion section is inserted into the insertion receiving section so that the abutment section is moved in the same direction as the insertion section, the slider further including a cam section, the cam section being a cam plate having elongated openings through which the contacts pass, and cam surfaces formed on walls included in the respective elongated openings, characterized in that the cam plate is configured to press the contacts towards the first surface of the insertion section when the abutment section is moved so as to cause the contacts to elastically deform and be pressed against the connection pads, the cam surfaces being orientated to extend obliquely towards the first surface when the insertion section is inserted into the insertion receiving section, and the cam surfaces being on the rear side in the insertion direction of the mating connector.

The connector according to the present invention includes the above-described pressing member, and thus, the contacts are pressed against the connection pads when moving to the final stage of inserting the mating connector into the insertion receiving section. For this reason, the insertion section does not suffer or just slightly suffers an interference from the contacts until the final stage of the insertion movement, and thus, the mating connector can be inserted by an small insertion force. As for the pressing member, since the contacts receive a force from the insertion section to be connected to the connection pad in the final stage of the insertion movement, the mating is completed by only the insertion movement.

Since the contacts are pressed against the insertion section including the connection pads in the final stage of the insertion, there is no possibility where a pad arranged more forwardly in the insertion direction rubs against a contact more frequently for many times, and thereby preventing the life thereof from being shortened.

As described above, due to the pressing section including the abutment section and the cam section, pressing the contacts against the connection pads in the final stage of the insertion can be obtained with a simple structure.

According to the above-described present invention, the connector having structure suitable for having multiple contacts is provided, in which the mating is completed by only one insertion operation of the mating connector.

According to another aspect of the present invention there is provided a method of mating connectors according to claim 2 comprising the steps of: (a) providing a mating connector having a tabular insertion section and connection pads formed on a first surface of the insertion section; (b) providing a connector having a housing that includes an insertion receiving section to receive the tabular insertion section of the mating connector, contacts which correspond to the connection pads, and a pressing member being a slider and having an abutment section and a cam section, the cam section being a cam plate and having elongated openings through which the contacts pass, and cam surfaces formed on walls included in the respective elongated openings, the cam surfaces being orientated to extend obliquely towards the first surface when the insertion section is inserted into the insertion receiving section, and the cam surfaces being on the rear side in the insertion direction of the mating connector; and (c) inserting the insertion section of the mating connector into the insertion receiving section of the connector such that the contacts face the first surface, and wherein: (i) when the insertion section is initially inserted into the insertion receiving section, the contacts are spaced from the first surface; and (ii) when the insertion section is at the final stage of insertion into the insertion receiving section, the contacts are pressed against the connection pads by means of the slider receiving a force from the insertion section, wherein the abutment section engages with the insertion section so that the abutment section is moved in the same direction as the insertion section, and the contacts are pressed towards the first surface of the insertion section by means of the cam plate when the abutment section is moved so as to cause the contacts to elastically deform and be pressed against the connection pads.

### BRIEF DESCRIPTION OF THE DRAWINGS

FIG. 1 is an external perspective view of a connector of an embodiment according to the present invention;
FIG. 2 is an exploded perspective view illustrating the connector whose external view is illustrated in FIG. 1 where the connector is exploded into an outer shell (part (A)) and remaining components (part (B));
FIG. 3 is a perspective view illustrating the outer shell upside down;
FIG. 4 is an exploded perspective view illustrating an assembly remained by removing the outer shell from the connector according the present embodiment where the assembly is separated into an upper housing with a lid member (part (A)) and remaining components (part (B));
FIG. 5 is an exploded perspective view illustrating the upper housing with the lid member where the upper housing with lid member is separated into the upper housing (part (A)) and the lid member (part (B));
FIG. 6 is a perspective view illustrating a base housing upside down in a state in which the contacts are press-fitted into the base housing;
FIG. 7 is an exploded perspective view illustrating all of the components included in the connector according to the present embodiment whose assembled state is illustrated in FIG. 1;
FIG. 8 is an exploded perspective view illustrating the connector illustrated in FIG. 1 upside down while all of the components are separated from each other; and
FIG. 9 is a sectional view illustrating operations in the final stage when an insertion section of a mating connector is inserted into the connector according to the present embodiment.

### DETAILED DESCRIPTION

In the following, an embodiment of the connector according to the present invention will be described with reference to the attached drawings.

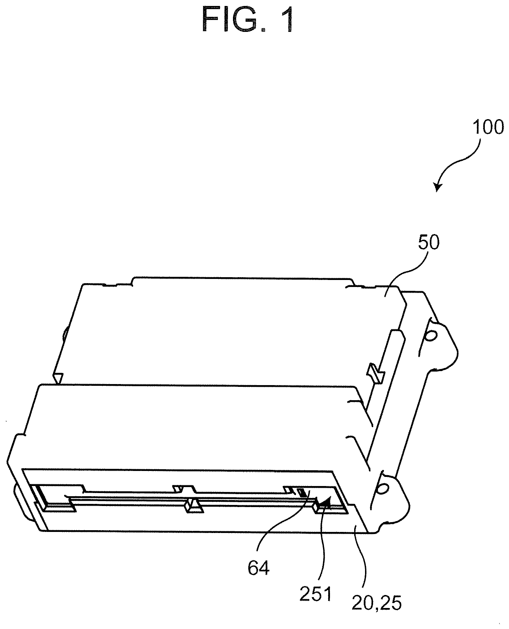

FIG. 1 is an external perspective view of a connector of an embodiment according to the present invention.

The connector 100 is covered with an outer shell 50 made of metal. An insertion opening 251 which is covered with a lid member 64 and into which a tabular insertion section of a mating connector is to be inserted is provided in a front wall 25 of a base housing 20 which is exposed toward the front.

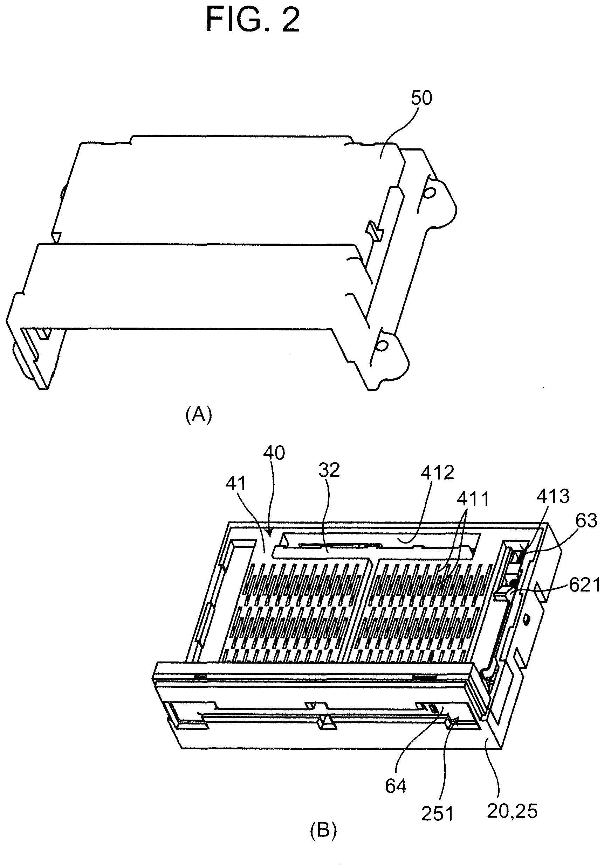

FIG. 2 is an exploded perspective view illustrating the connector whose external view is illustrated in FIG. 1 where the connector is exploded into an outer shell (part (A)) and remaining components (part (B)).

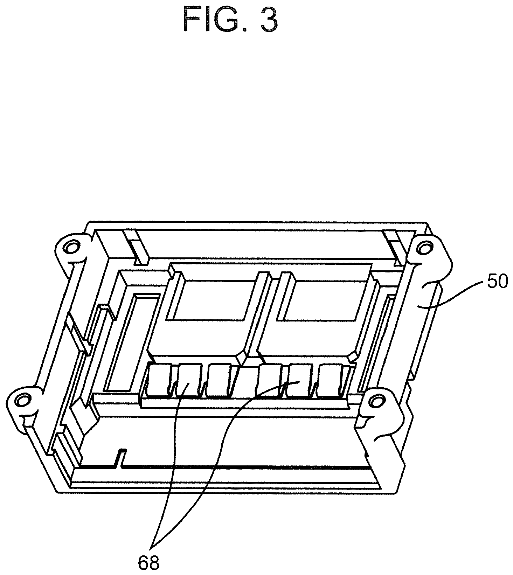

FIG. 3 is a perspective view illustrating the outer shell upside down.

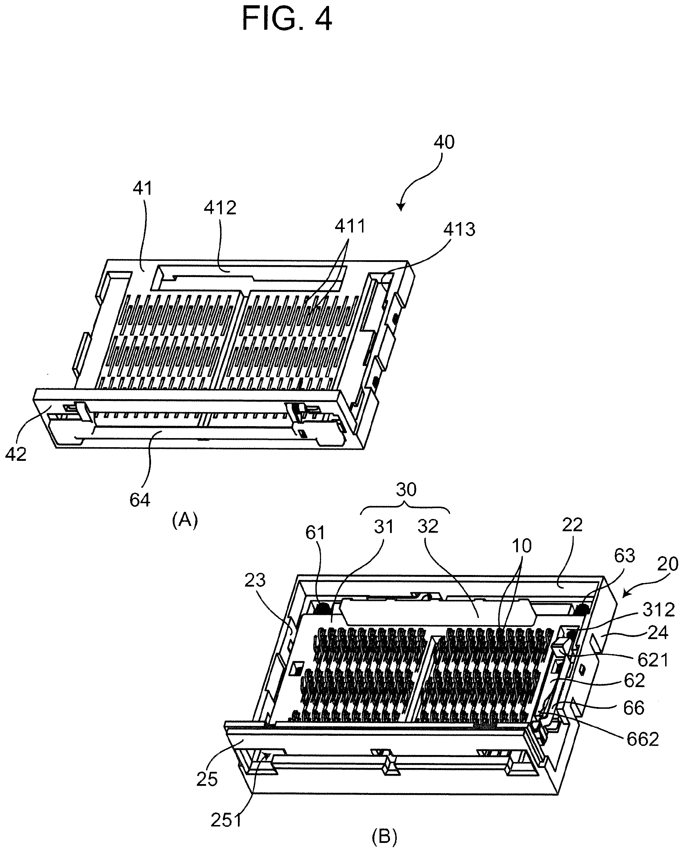

FIG. 4 is an exploded perspective view illustrating an assembly remained by removing the outer shell from the connector according the present embodiment where the assembly is separated into an upper housing with a lid member (part (A)) and remaining components (part (B)).

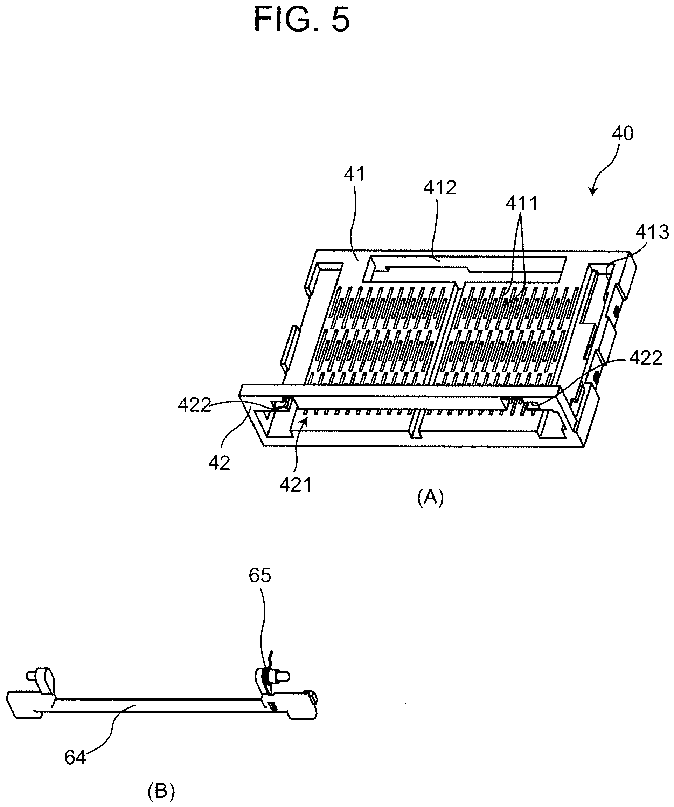

FIG. 5 is an exploded perspective view illustrating the upper housing with the lid member where the upper housing with the lid member is separated into the upper housing (part (A)) and the lid member (part (B)).

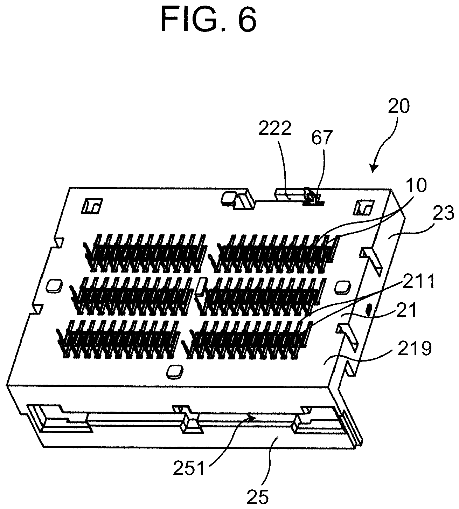

FIG. 6 is a perspective view illustrating a base housing upside down in a state in which the contacts are press-fitted into the base housing.

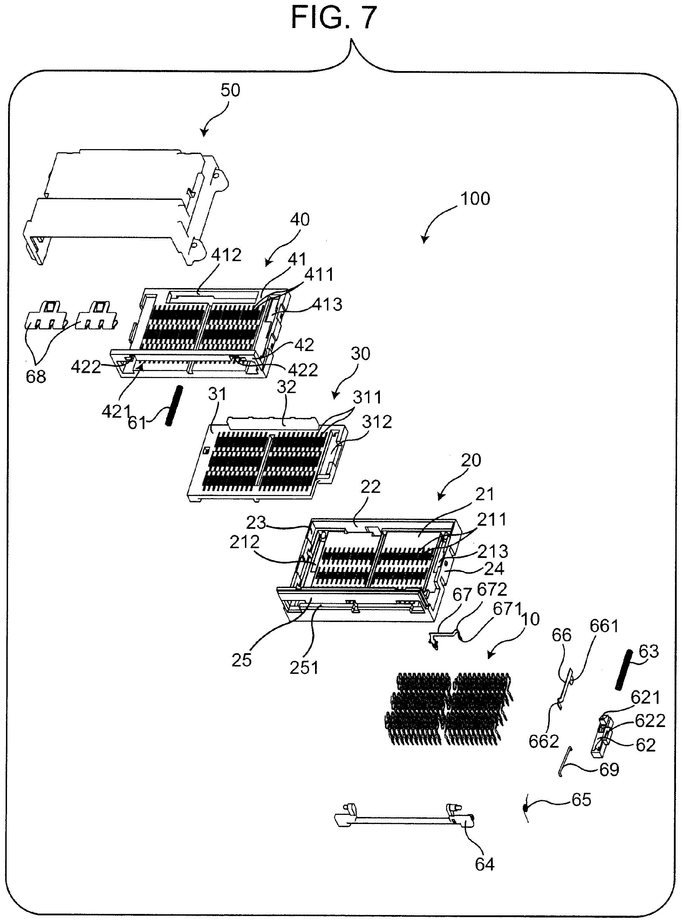

FIG. 7 is an exploded perspective view illustrating all of the components included in the connector according to the present embodiment whose assembled state is illustrated in FIG. 1.

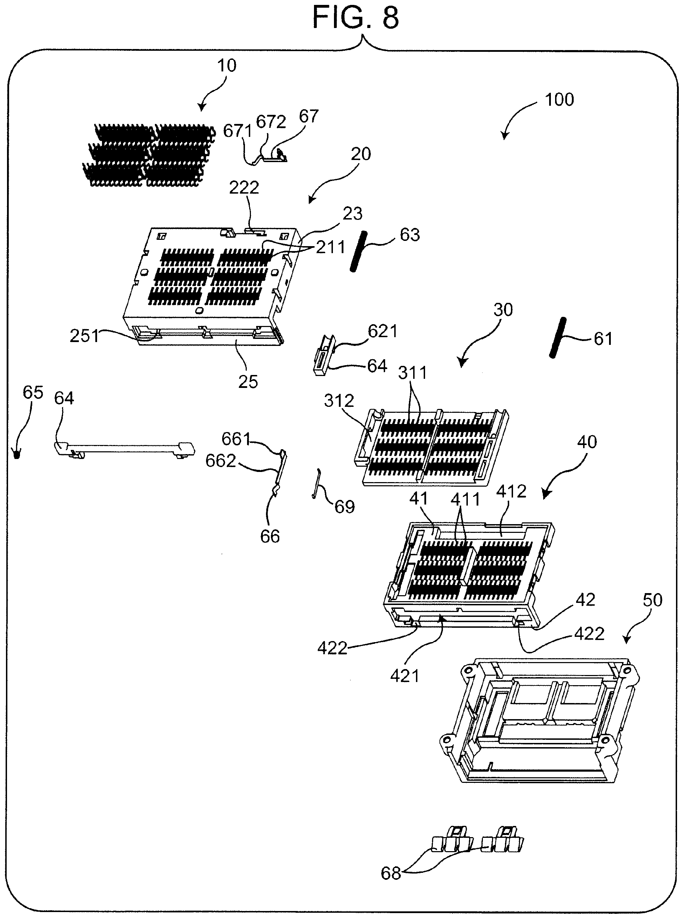

FIG. 8 is an exploded perspective view illustrating the connector illustrated in FIG. 1 upside down while all of the components are separated from each other.

Here, mainly referring to the exploded perspective views illustrated in FIGS. 7 and 8, and also referring to FIGS. 1 to 6 as necessary, the connector 100 will be described.

The connector 100 according to the present embodiment includes plural contacts 10, a base housing 20, a slider 30, an upper housing 40 and an outer shell 50.

The base housing 20 includes a bottom plate 21. Many elongated openings 211 which penetrate from a top surface through a bottom surface thereof are formed in the bottom plate 21. The contacts 10 are press-fitted into the elongated openings 211 from a side of a bottom surface of the bottom plate 21 (a side of the bottom surface 219 illustrated in FIG. 6). FIGS. 7 and 8 illustrate the contacts 10 in a state in which the contacts 10 are press-fitted into the respective elongated openings 211 to be aligned.

Portions (see FIG. 6) of the contacts 10 which portions extend off from the bottom plate 21 to the side of the bottom surface 219 are to be connected to a circuit board (not illustrated) on which the connector 100 is to be placed.

Further, as illustrated in FIG, 7, in addition to the elongated openings 211, grooves 212, 213 are formed on the left and right in the bottom plate 21. A coil spring 61 is accommodated in the groove 212 on the left, and a cam member 62 in which a so-called heart cam groove is formed and a coil spring 63 are accommodated in the groove 213 on the right. One end of a cam bar 69 is inserted into the heart cam groove formed in the cam member 62. The other end of the cam bar 69 is supported by the base housing 20.

In addition, the base housing 20 includes a rear wall 22, left and right walls 23, 24 and a front wall 25 upstanding so as to surround the bottom plate 21.

An insertion opening 251 into which an insertion section of a mating connector is inserted is provided in the front wall 25. The lid member 64 which is supported by the upper housing 40 is arranged immediately inside the insertion opening 251, thereby forming a configuration in which the insertion opening 251 is closed by the lid member 64 (see FIG. 1). The lid member 64 has a configuration in which the lid member 64 is pressed by a tip of the insertion section of the mating connector from the outside to be rotated inwardly upward so as to open the insertion opening 251, and when the mating connector is removed, the lid member 64 closes the insertion opening 251 by an action of a torsion spring 65.

The slider 30 is arranged on the bottom plate 21 of the base housing 20 as illustrated in part (B) of FIG. 4. The slider 30 includes a cam plate 31 and a standing wall 32 standing at a side of a rear end of the cam plate 31. Many elongated openings 311 which penetrate from the top surface to the bottom surface and through which the contacts 10 are allowed to pass as illustrated in part (B) of FIG. 4, and an elongated opening 312 through which the cam member 62 is allowed to pass is formed in the cam plate 31. The cam plate 31 enters a state in which the cam plate 31 is pressed toward the front wall 25 by the two coil springs 61, 63 in the base housing 20. The coil spring 61 is accommodated in the groove 212 to directly press the slider 30 toward the front wall 25. The other coil spring 63 is arranged in the groove 213 of the base housing 20 to directly press the cam member 62. The cam member 62 is also placed in the elongated opening 312 of the slider 30. For this reason, the cam member 62 pressed by the coil spring 63 presses a wall of the elongated opening 312 in the slider 30, so that the slider 30 enters a state in which the slider 30 is pressed via the cam member 62 toward the front wall 25 in the base housing 20.

Here, in the present embodiment, the slider 30 corresponds to an example of the pressing member according to the present invention, the standing wall 32 corresponds to an example of the abutment section according to the present invention, and the cam plate 31 corresponds to an example of the cam section according to the present invention.

Further, the upper housing 40 illustrated in part (A) of FIG. 4 is arranged on the slider 30, and furthermore, the outer shell 50 illustrated in part (A) of FIG. 2 covers the upper housing 40. The outer shell 50 is made of metal and is held at a ground potential, thereby serving for shielding the connector 100.

The upper housing 40 includes an upper plate 41 and a front wall 42 standing from the upper plate 41 on a front side thereof. The upper plate 41 forms a space between the upper plate 41 and the base plate 21 of the base housing 20 in which space the slider 30 is disposed. Many elongated openings 411 which allow the contacts 10 to pass therethrough are formed in the upper plate 41, and in addition, an elongated opening 412 which allows the standing wall 32 of the slider 30 to pass therethrough is also formed in the upper plate 41.

In addition, a bump section 621 is provided on the above-described cam member 62, and an elongated opening 413 which allows the bump section 621 of the cam member 62 to pass therethrough is also formed in the upper plate 41 of the upper housing 40.

In addition, a receiving slot 421 which receives the insertion section of the mating housing which is inserted from the insertion opening 251 formed in the front wall 25 of the base housing 20 is formed in the front wall 42 of the upper housing 40. In addition, as illustrated in part (A) of FIG. 5, a supporting section 422 which rotatably supports the lid member 64 is provided in an upper portion of the receiving opening 421 of the front wall 42. The lid member 64 is supported by the supporting section 422 as illustrated in part (A) of FIG. 4 to be rotatable inwardly upward. The lid member 64 is biased in a direction of closing the insertion opening 251 of the base housing 20 by a torsion spring 65.

The insertion section of the mating connector is inserted from the insertion opening 251 illustrated in FIG. 1 of the base housing 20. Next, the insertion section pushes up the lid member 64 supported by the upper housing 40 and is inserted onto the upper housing 40 of the assembly as assembled in the state as illustrated in part (B) of FIG. 2 from the receiving opening 421 of the upper housing 40. A tip of the inserted insertion section of the mating connector first bumps against the bump section 621 of the cam member 62 to slide the cam member 62 toward the depth against the biasing of the coil spring 63. When the cam member 62 is slid toward the depth and the bump section 621 is positioned by the standing wall 32 of the slider 30, the tip of the insertion section of the mating connector bumps against the bump section 621 of the cam member 62 and also against the standing wall 32 of the slider 30. For this reason, the tip of the insertion section slides the cam member 62 and the slider 30 together toward the depth against the biasing of the two coil springs 61, 63. In other words, in the connector 100 according to the present embodiment, the space over the upper plate 41 of the upper housing 40, i.e., the space between the upper plate 41 and the outer shell 50 which is put over the upper plate 41 to cover the upper plate 41 corresponds to an example of the "an insertion receiving section" to receive the mating connector.

Here, top ends of the contacts 10 have such shapes that, before the insertion section of the mating connector is inserted, the top ends of the contacts 10 are positioned inside the elongated openings 411 which are provided in the upper plate 41 of the upper housing 40 and allows the contacts 10 to pass therethrough, and do not protrude from the upper surface of the upper plate 41 (see part (B) of FIG. 2) . In other words, before the insertion of the insertion section of the mating connector and in the beginning of the insertion, the contacts 10 are away or spaced from the insertion section when the insertion section of the mating connector is inserted, and are arranged at positions facing the insertion section.

In addition, many connection pads whose arrangement matches that of the contacts 10 are formed on a surface (corresponding to an example of "a first surface" according to the present invention) of the insertion section of the mating connector which surface faces the upper plate 41 of the upper housing 40.

The insertion section of the mating connector is inserted into the insertion receiving section, i.e., onto the upper surface of the upper plate 41 of the upper housing 40, and at the time of the final movement of the insertion, the standing wall 32 of the slider 30 is pressed or engaged by the insertion section of the mating connector to be slid. Subsequently, walls of the elongated openings 311 provided in the cam plate 31 of the slider 30 press the contacts 10 so as to deform the contacts 10 in a direction of protruding from the elongated openings 411 of the upper plate 41 in the upper housing 40. The insertion section of the mating connector is inserted on the upper surface of the upper plate 41, and thus, the contacts 10 are electrically connected to the connection pads formed on the bottom surface (the first surface) of the insertion section. A manner as to how the contacts 10 are deformed by being pressed by the slider 30 will be described later.

When the insertion section of the mating connector is inserted up to the depth, and the connection pads and the contacts 10 enter a state of being respectively connected with each other, the heart cam groove of the cam member 62 and the cam rod 69 are engaged with each other, so that the cam member 62 is locked while being slid to the depth. Since the cam member 62 enters the elongated opening 312 of the cam plate 31 of the slider 30 to slide the slider 30 together to the depth, the cam member 62 is locked and thus the slider 30 remains in a state of being slid to the depth. An insertion piece 661 of a lock member 66 is inserted into an insertion opening 622 of the cam member 62, and a lock section 662 of the lock member 66 is engaged with a depression section (not illustrated) on a side surface of the inserted insertion section of the mating connector to lock the mating connector in the inserted state.

In addition, a switch piece 67 is supported in the groove 222 on a side of the rear end of the base housing 20 by the base housing 20. A rear end 671 of the switch piece 67 is pressed by the slider 30 which is being slid into the depth, and a contact section 672 makes contact with the outer shell 50 to be at the potential same as the ground potential. This fact is detected by a circuit board, so that the mating between the connector 100 and the mating connector is recognized.

As illustrated in FIG. 3, the spring contact pieces 68 made of metal are attached to an inner surface of the outer shell 50. A ground pad spreads on a surface of the insertion section of the mating connector which surface faces the outer shell 50. The spring contact pieces 68 are connected to a ground pad of the insertion section inserted into the insertion receiving section (the space defined by the upper plate 41 of the upper housing 40 and the outer shell 50), and serve for keeping the ground pad in the ground potential.

When the mating connector is pressed again toward the depth in the insertion direction in the state in which the insertion section of the mating connector is inserted into the insertion receiving section, the engagement between the heart cam groove of the cam member 62 and a cam rod 69 is released. For this reason, the slider 30 is slid forward by the biasing of the two coil springs 61, 63. In addition, the cam member 62 is also slid forward, so that the locking of the insertion section by the lock member 66 which locks the insertion section of the mating connector is also released. In such way, the mating connector is pressed out from the connector 100.

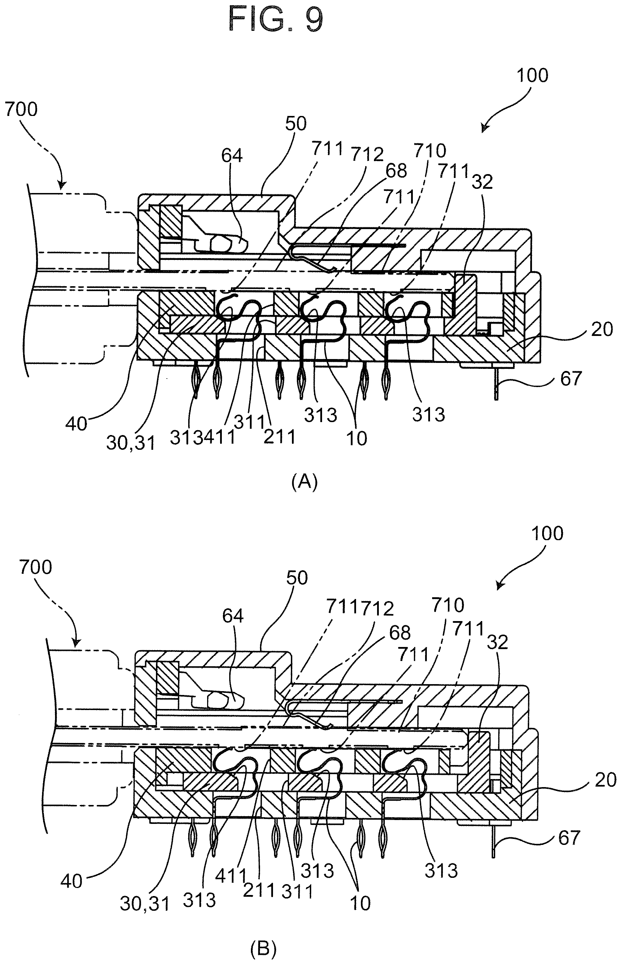

FIG. 9 is a sectional view illustrating operations of the final stage when the insertion section of the mating connector is inserted into the connector according to the present embodiment illustrated in FIGS. 1-8.

Part (A) of FIG. 9 is a view illustrating a state in which the tabular insertion section 710 of the mating connector 700 is inserted up to a position slightly before the final position. Part (B) of the FIG. 9 is a view illustrating a state in which the insertion section 710 is inserted up to the final position.

The insertion section 710 of the mating connector 700 is tabular, and connection pads 711 corresponding to the contacts 10 are formed on the first surface (a surface facing the contacts 10) of the insertion section 710. In addition, the ground connection pad 712 is formed on a second surface (a surface facing the outer shell 50) of the insertion section 710.

As described above, in the connector 100 according to the present embodiment, the base housing 20, the slider 30 and the upper housing 40 are stacked from a bottom to a top in this order on the circuit board (not illustrated) and are connected to the circuit board. The upper housing 40 is covered by the outer shell 50 so that the insertion receiving section for receiving the insertion section 710 of the mating connector 700 therein is formed.

The contacts 10 are press-fitted into the elongated openings 211 of the base housing 20 to be held. The contacts 10 go through the elongated openings 311 of the slider 30, and further enter the elongated openings 411 of the upper housing 40. However, as illustrated in part (A) of FIG. 9, before the insertion and at the beginning of the insertion of the insertion section 710 of the mating connector 700, the top ends of the contacts 10 remain inside the elongated openings 411 of the upper housing 40. In other words, before the insertion and at the beginning of the insertion, the contacts 10 are located at positions which face the insertion section 710 and also are separated from the insertion section 710 when the insertion section 710 of the mating connector 700 is inserted into the insertion receiving section. Cam surfaces 313 oriented obliquely upward are formed on the walls which are included in the respective elongated openings 311 of the cam plate 31 of the slider 30 and are on the rear side in the insertion direction (the left side in FIG. 9). When the slider 30 is pressed by a tip of the insertion section 710 of the mating connector 700 and slid to the depth, as illustrated in part (A) of FIG. 9, the cam surfaces 313 bump midpoints of the contacts 10, respectively. As a result, in the course in which the insertion section 710 of the mating connector 700 is further being inserted to the depth, portions positioned upper than the midpoints in the contacts 10 are deformed by the cam surfaces 313 such that the portions positioned more upward than the midpoints in the contacts 10 are lifted by the cam surfaces 313, respectively, and enter the state as illustrated in part (B) of FIG. 9. At this moment, the contacts 10 are pressed against the corresponding connection pads 711 which are formed on the first surface of the insertion section 710 of the mating connector 700, so that the contacts 10 are electrically conducted to the corresponding connection pads 711, respectively. In addition, the state is in that the spring contact pieces 68 attached to the outer shell 50 make contact with the grounding pad 712 formed on the second surface of the insertion section 710.

As described above, according to the connector 100 of the present embodiment, the contacts 10 are pressed against the connection pads 711 at the final stage of the insertion in which the insertion section 710 of the mating connector 700 is inserted into the insertion receiving section. For this reason, until the final stage of the insertion, the insertion section 710 is inserted by a low insertion force without suffering interference from the contacts 10. In addition, slider 30 receives a force from the insertion section 710 of the mating connector 700 to press the contacts 10 against the connection pads 711, so that the mating is completed only by the insertion operation.

Further, the plural connection pads are arranged in the insertion direction on the first surface of the insertion section 710 of the mating connector 700, and corresponding to the arrangement, the connector 100 of the present embodiment has the configuration in which the connector 100 includes the contacts 10 arranged in the insertion direction. However, when the contacts 10 come into contact with the insertion section 710 including the connection pads 711 is the final stage of the insertion. For this reason, there is no risk in which a contact 10 which does not correspond to a corresponding connection pad 711 makes contact with the corresponding connection pad 711 at the mid-stage of the insertion to cause malfunction to occur. In addition, there is no possibility in which a contact pad 711 positioned more forward in the insertion direction is rubbed with a contact 10 more frequently to decrease the life thereof.

However, in a case in which, thanks to an idea for circuitry and the like, even if a contact which does not correspond to a corresponding connection pad makes contact with the corresponding connection pad in the middle of the insertion, malfunction does not occur, a configuration in which the contacts 10 slightly protrude from the upper plate 41 of the upper housing 40 and the insertion section is inserted while the insertion section of the mating connector slightly makes contact with the contacts.

## Claims

1. A connector (100) comprising: a housing (20, 40) including an insertion receiving section which is configured to receive a tabular insertion section (710) of a mating connector (700) having connection pads (711) formed on a first surface of the insertion section (710); contacts (10) configured to correspond to the connection pads (711), the contacts (10) being configured to face the first surface when the insertion section (710) of the mating connector (700) is inserted into the insertion receiving section, and the contacts (10) being configured to be spaced from the first surface when the insertion section (710) is initially inserted into the insertion receiving section; and a pressing member (30) being a slider, the slider (30) configured to receive a force from the insertion section (710) when the insertion section (710) is at a final stage of insertion into the insertion receiving section, the slider (30) including an abutment section (32) which is configured to be engaged by the insertion section (710) when the insertion section (710) is inserted into the insertion receiving section so that the abutment section (32) is moved in the same direction as the insertion section (710), the slider (30) further including a cam section (31), the cam section being a cam plate (31) wherein
the cam plate (31) is configured to press the contacts (10) towards the first surface of the insertion section (710) when the abutment section (32) is moved so as to cause the contacts (10) to elastically deform and be pressed against the connection pads (711), **characterized by**
the cam plate (31) having elongated openings (311) through which the contacts (10) pass, and cam surfaces (313) formed on walls included in the respective elongated openings (311), the cam surfaces (313) being orientated to extend obliquely towards the first surface when the insertion section (710) is inserted into the insertion receiving section, and the cam surfaces (313) being on the rear side in the insertion direction of the mating connector (700).

2. A method of mating connectors comprising the steps of:
(a) providing a mating connector (700) having a tabular insertion section (710) and connection pads (711) formed on a first surface of the insertion section (710);
(b) providing a connector (100) having a housing (20, 40) that includes an insertion receiving section to receive the tabular insertion section (710) of the mating connector (700), contacts (10) which correspond to the connection pads (711), and a pressing member (30) being a slider and having an abutment section (32) and a cam section (31), the cam section (31) being a cam plate and having elongated openings (311) through which the contacts (10) pass, and cam surfaces (313) formed on walls included in the respective elongated openings (311), the cam surfaces (313) being orientated to extend obliquely towards the first surface when the insertion section (710) is inserted into the insertion receiving section, and the cam surfaces (313) being on the rear side in the insertion direction of the mating connector (700); and
(c) inserting the insertion section (710) of the mating connector (700) into the insertion receiving section of the connector (100) such that the contacts (10) face the first surface, and wherein: (i) when the insertion section (710) is initially inserted into the insertion receiving section, the contacts (10) are spaced from the first surface; and (ii) when the insertion section (710) is at the final stage of insertion into the insertion receiving section, the contacts (10) are pressed against the connection pads (711) by means of the slider (30) receiving a force from the insertion section (710), wherein the abutment section (32) engages with the insertion section (710) so that the abutment section (32) is moved in the same direction as the insertion section (710), and the contacts (10) are pressed towards the first surface of the insertion section (710) by means of the cam plate (31) when the abutment section (32) is moved so as to cause the contacts (10) to elastically deform and be pressed against the connection pads (711).

## Patentansprüche

1. Verbinder (100), der Folgendes umfasst:
ein Gehäuse (20, 40) mit einem Einsatzaufnahmeteil, der zum Aufnehmen eines flachen Einsatzteils (710) eines Gegenverbinders (700) mit Verbindungspads (711) konfiguriert ist, die auf einer Fläche des Einsatzteils (710) ausgebildet sind; Kontakte (10), die so konfiguriert sind, dass sie den Verbindungspads (711) entsprechen, wobei die Kontakte (10) so konfiguriert sind, dass sie der ersten Fläche zugewandt sind, wenn der Einsatzteil (710) des Gegenverbinders (700) in den Einsatzaufnahmeteil eingesetzt wird, und wobei die Kontakte (10) so konfiguriert sind, dass sie von der ersten Fläche beabstandet sind, wenn der Einsatzteil (710) anfänglich in den Einsatzaufnahmeteil eingesteckt wird; und ein Presselement (30), das ein Schieber ist, wobei der Schieber (30) zum Aufnehmen einer Kraft vom Einsatzteil (710) konfiguriert ist, wenn der Einsatzteil (710) in einer Endphase des Einsetzens in den Einsatzaufnahmeteil ist, wobei der Schieber (30) einen Anlageteil (32) aufweist, der so konfiguriert ist, dass der Einsatzteil (710) darin eingreifen kann, wenn der Einsatzteil (710) in den Einsatzaufnahmeteil eingesetzt wird, so dass der Anlageteil (32) in derselben Richtung bewegt wird wie der Einsatzteil (710), wobei der Schieber (30) ferner einen Nockenteil (31) aufweist, wobei der Nockenteil eine Nockenplatte (31) ist, wobei die Nockenplatte (31) zum Drücken der Kontakte (10) in Richtung der ersten Fläche des Einsatzteils (710) konfiguriert ist, wenn der Anlageteil (32) bewegt wird, um zu bewirken, dass sich die Kontakte (10) elastisch verformen und gegen die Verbindungspads (711) gedrückt werden,
**dadurch gekennzeichnet, dass** die Nockenplatte (31) längliche Öffnungen (311), durch die die Kontakte (10) passieren, und Nockenflächen (313) aufweist, die an Wänden ausgebildet sind, die in den jeweiligen länglichen Öffnungen (311) enthalten sind, wobei die Nockenflächen (313) so orientiert sind, dass sie schräg in Richtung der ersten Fläche verlaufen, wenn der Einsatzteil (710) in den Einsatzaufnahmeteil eingesetzt wird, und wobei die Nockenflächen (313) auf der Rückseite in Einsatzrichtung des Steckverbinders (700) sind.

2. Verfahren zum Zusammenstecken von Verbindern, das die folgenden Schritte beinhaltet:
(a) Bereitstellen eines Gegenverbinders (700) mit einem flachen Einsatzteil (710) und Verbindungspads (711), die auf einer ersten Fläche des Einsatzteils (710) ausgebildet sind;
(b) Bereitstellen eines Verbinders (100) mit einem Gehäuse (20, 40), das einen Einsatzaufnahmeteil zum Aufnehmen des flachen Einsatzteils (710) des Gegenverbinders (700), Kontakte (10) entsprechend den Verbindungspads (711) und ein Presselement (30) aufweist, das ein Schieber ist und einen Anlageteil (32) und einen Nockenteil (31) aufweist, wobei der Nockenteil (31) eine Nockenplatte ist und längliche Öffnungen (311) hat, durch die die Kontakte (10) passieren, und Nockenflächen (313), die an Wänden ausgebildet sind, die in den jeweiligen länglichen Öffnungen (311) enthalten sind, wobei die Nockenflächen (313) so orientiert sind, dass sie schräg in Richtung der ersten Fläche verlaufen, wenn der Einsatzteil (710) in den Einsatzaufnahmeteil eingesetzt wird, und wobei die Nockenflächen (313) auf der Rückseite in Einsatzrichtung des Gegenverbinders (700) sind; und
(c) Einsetzen des Einsatzteils (710) des Gegenverbinders (700) in den Einsatzaufnahmeteil des Verbinders (100), so dass die Kontakte (10) der ersten Fläche zugewandt sind, und wobei: (i) wenn der Einsatzteil (710) anfänglich in den Einsatzaufnahmeteil eingesetzt wird, die Kontakte (10) von der ersten Fläche beabstandet sind; und (ii) wenn der Einsatzteil (710) in der letzten Einsatzphase in den Einsatzaufnahmeteil ist, die Kontakte (10) gegen die Kontaktpads (711) gedrückt werden, indem der Schieber (30) eine Kraft vom Einsatzteil (710) aufnimmt, wobei der Anlageteil (32) in den Einsatzteil (710) eingreift, so dass der Anlageteil (32) in derselben Richtung bewegt wird wie der Einsatzteil (710), und die Kontakte (10) mittels der Nockenplatte (31) in Richtung der ersten Fläche des Einsatzteils (710) geschoben werden, wenn der Anlageteil (32) bewegt wird, um zu bewirken, dass sich die Kontakte (10) elastisch verformen und gegen die Verbindungspads (711) gedrückt werden.

## Revendications

1. Connecteur (100) comprenant :
un boîtier (20, 40) comportant une section de réception d'insertion configurée pour recevoir une section d'insertion tabulaire (710) d'un connecteur homologue (700) présentant des plots de connexion (711) formés sur une première surface de la section d'insertion (710) ; des contacts (10) configurés pour correspondre aux plots de connexion (711), les contacts (10) étant configurés pour faire face à la première surface quand la section d'insertion (710) du connecteur homologue (700) est insérée dans la section de réception d'insertion, et les contacts (10) étant configurés pour être espacés de la première surface quand la section d'insertion (710) est initialement insérée dans la section de réception d'insertion ; et un élément de pression (30) étant un curseur, le curseur (30) étant configuré pour recevoir une force depuis la section d'insertion (710) quand la section d'insertion (710) est à un stade final d'insertion dans la section de réception d'insertion, le curseur (30) comportant une section de butée (32) qui est configurée pour venir en prise avec la section d'insertion (710) quand la section d'insertion (710) est insérée dans la section de réception d'insertion de telle sorte que la section de butée (32) se déplace dans le même sens que la section d'insertion (710), le curseur (30) comportant en outre une section de came (31), la section de came étant une plaque de came (31) dans lequel la plaque de came (31) est configurée pour presser les contacts (10) vers la première surface de la section d'insertion (710) quand la section de butée (32) est déplacée de manière à déformer élastiquement et presser les contacts (10) contre les plots de connexion (711),
**caractérisé en ce que** la plaque de came (31) présente des ouvertures allongées (311) à travers lesquelles passent les contacts (10), et des surfaces de came (313) formées sur des parois incluses dans les ouvertures allongées respectives (311), les surfaces de came (313) étant orientées de manière à s'étendre de manière oblique vers la première surface quand la section d'insertion (710) est insérée dans la section de réception d'insertion, et les surfaces de came (313) se trouvant sur le côté arrière dans le sens d'insertion du connecteur homologue (700).

2. Procédé d'accouplement de connecteurs comprenant les étapes suivantes :
(a) la fourniture d'un connecteur homologue (700) présentant une section d'insertion tabulaire (710) et des plots de connexion (711) formés sur une première surface de la section d'insertion (710) ;
(b) la fourniture d'un connecteur (100) présentant un boîtier (20, 40) qui comporte une section de réception d'insertion pour recevoir la section d'insertion tabulaire (710) du connecteur homologue (700), des contacts (10) qui correspondent aux plots de connexion (711), et un élément de pression (30) étant un curseur et présentant une section de butée (32) et une section de came (31), la section de came (31) étant une plaque de came et présentant des ouvertures allongées (311) à travers lesquelles passent les contacts (10), et des surfaces de came (313) formées sur des parois incluses dans les ouvertures allongées respectives (311), les surfaces de came (313) étant orientées de manière à s'étendre de manière oblique vers la première surface quand la section d'insertion (710) est insérée dans la section de réception d'insertion, et les surfaces de came (313) se trouvant sur le côté arrière dans le sens d'insertion du connecteur homologue (700) ; et
(c) l'insertion de la section d'insertion (710) du connecteur homologue (700) dans la section de réception d'insertion du connecteur (100) de telle sorte que les contacts (10) fassent face à la première surface, et dans lequel : (i) quand la section d'insertion (710) est initialement insérée dans la section de réception d'insertion, les contacts (10) sont espacés de la première surface ; et (ii) quand la section d'insertion (710) est au stade final d'insertion dans la section de réception d'insertion, les contacts (10) sont pressés contre les plots de connexion (711) au moyen du curseur (30) recevant une force depuis la section d'insertion (710), dans lequel la section de butée (32) vient en prise avec la section d'insertion (710) de telle sorte que la section de butée (32) soit déplacée dans le même sens que la section d'insertion (710), et les contacts (10) sont pressés vers la première surface de la section d'insertion (710) au moyen de la plaque de came (31) quand la section de butée (32) est déplacée de manière à déformer élastiquement et presser les contacts (10) contre les plots de connexion (711) .
